(19) Europäisches Patentamt
European Patent Office
Office européen des brevets

(11) EP 2 000 268 A2

(12) EUROPEAN PATENT APPLICATION

(43) Date of publication:
10.12.2008 Bulletin 2008/50

(51) Int Cl.:
B25J 9/16 (2006.01)

(21) Application number: 08010116.5

(22) Date of filing: 03.06.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 06.06.2007 JP 2007150614

(71) Applicant: Fanuc Ltd
Yamanashi 401-0597 (JP)

(72) Inventors:
• Kato, Tetsuaki
c/o Fanuc Ltd.
Minamitsuru-gun
Yamanashi 401-0597 (JP)
• Kuroshita, Teruki
c/o Fanuc Ltd.
Minamitsuru-gun
Yamanashi 401-0511 (JP)

(74) Representative: Thum, Bernhard
Wuesthoff & Wuesthoff
Patent- und Rechtsanwälte
Schweigerstrasse 2
81541 München (DE)

(54) **Robot control apparatus**

(57) A robot control apparatus for soft control operation of a robot has position and velocity control loops for each control axis of the robot. The position control gain and the velocity control gain of a specified control axis in soft control operation is set lower than those of the other control axes. The orientation of the forward end of the robot arm to be assumed while following an external force, i.e., the orientation thereof immediately before starting the follow-up operation is determined. The position command or the velocity command for the control axes other than the specified control axis, which are determined based on the present position of the specified control axis moved by the external force applied to the forward end of the robot arm, the direction to follow the external force and the orientation immediately before starting the follow-up operation, is applied to the control loop of the particular control axis.

Fig.5

SERVO PROCESSING FOR ORTHOGONAL SOFT FLOAT

AXIS REDUCED IN GAIN ? — S20 — NO

YES — S21

EXECUTE EACH PROCESS FOR POSITION LOOP, INTEGRATION AND VELOCITY LOOP USING REDUCED GAINS $K_{ps}$, $K_{vs}$

READ REQUIRED TRAVEL DISTANCE $\delta Jx$ FROM SHARED RAM — S22

ADD REQUIRED TRAVEL DISTANCE $\delta Jx$ TO POSITION LOOP INPUT AND ADD DIFFERENTIATION THEREOF TO VELOCITY LOOP INPUT — S23

EXECUTE EACH PROCESS FOR POSITION LOOP, INTEGRATION AND VELOCITY LOOP USING NORMAL GAINS $K_p$, $K_v$ — S24

END

EP 2 000 268 A2

**Description**

BACKGROUND OF THE INVENTION

1. Field of the Invention

This invention relates to a robot control apparatus for soft control of an industrial robot. In particular, to a robot control technique adapted to change the softness on the orthogonal coordinate system by controlling a servo motor for driving the robot axes.

2. Description of the Related Art

As a conventional technique for maintaining the robot orientation during the soft control operation, a "robot control apparatus" is disclosed in the below-mentioned Patent Document 1 (Patent Publication No. 3473834). In this robot control apparatus, the robot can be controlled in such a way that the soft operation in translation can be performed while the tool mounted at the forward end of the robot hand is kept in a predetermined orientation. This apparatus, however, has no means for requesting a command for the control axes not in soft control operation in accordance with the direction to follow an external force.

The below-mentioned Patent Document 2 (Japanese Unexamined Patent Publication (Kokai) No. 8-155868), on the other hand, discloses a robot control method for controlling the relief follow-up operation in a predetermined direction with respect to an external force exerted on the tool of an industrial robot. This method also lacks means for requesting a command for control axes not in soft control operation in accordance with the direction to follow an external force.

Patent Document 1: Patent Publication No. 3473834
Patent Document 2: Japanese Unexamined Patent Publication (Kokai) No. 8-155868

According to the conventional technique for maintaining the orientation of the robot in soft control operation, as described above, the problem occurs in that the follow-up direction cannot be designated or, if any can be designated, the motion in the direction to follow is hampered by the torque for controlling the directions not to follow.

SUMMARY OF THE INVENTION

This invention has been achieved in view of the problem described above, and the object thereof is to provide a robot control apparatus in which while maintaining the orientation of the robot in soft control operation, the motion in the direction to follow is not hampered even in the case in which a force is exerted in a direction displaced from the direction to follow.

In order to achieve the object described above, according to a first aspect of this invention, there is provided a robot control apparatus having position and velocity control loops for each robot control axis, comprising means for inputting the information on the direction of the forward end of the robot arm to follow an external force; means for setting the position control gain and the velocity control gain of a specified control axis at a lower level than the position control gain and the velocity control gain, respectively, of the control axes other than the specified control axis; means for determining the orientation to be assumed by the forward end of the robot arm while following the external force, i.e. the orientation of the forward end of the robot arm immediately before starting the follow-up; means for determining each of the position command and the velocity command of the control axes other than the specified control axis based on the present position of the specified control axis moved by the external force applied to the forward end of the robot arm, the direction to follow the external force and the orientation of the forward end of the robot arm immediately before starting the follow-up; and means for applying a position command or a velocity command for the control axes other than the specified control axis to the control loop of each of the control axes.

In short, the robot control apparatus according to this invention is so configured that the gain for a specified control axis is reduced during the soft control operation on the one hand and a command is determined and applied to the control axes not in soft control operation based on the direction to follow the external force.

According to a second aspect of this invention, there is provided a robot control apparatus, wherein the specified control axis is preferably set by manual input.

According to a third aspect of this invention, there is provided a robot control apparatus, wherein the specified control axis is set automatically in accordance with the direction in which the forward end of the robot arm is to follow the external force and the robot position in which the external force is applied to the forward end of the robot arm.

In the robot control apparatus according to this invention, the gain for a specified control axis is reduced during the soft control operation on the one hand and a command is determined and applied to the control axes not in soft control operation based on the direction to follow the external force on the other hand, so that the direction to follow can be designated while maintaining the orientation of the robot in soft control operation, the motion in the direction to follow is not hampered by the torque for controlling the directions not to follow, and even in the case in which a force is applied in the direction displaced from the direction to follow, the motion in the direction to follow is made possible with a small force.

BRIEF DESCRIPTION OF THE DRAWINGS

The above object and features will be made apparent by the description of preferred embodiments of the invention taken below in conjunction with the accompanying drawings, in which:

Fig. 1 is a schematic diagram showing a general configuration of the robot control system according to this invention;
Fig. 2 is a block diagram showing the configuration of the robot control apparatus according to the invention;
Fig. 3 is a block diagram showing the control system in soft control operation according to this invention;
Fig. 4 is a flowchart showing the host processing of the orthogonal soft float according to the invention;
Fig. 5 is a flowchart showing the servo processing of the orthogonal soft float according to the invention; and
Fig. 6 is a diagram showing the parameter setting screen of the orthogonal soft float according to this invention.

DESCRIPTION OF THE PREFERRED EMBODIMENTS

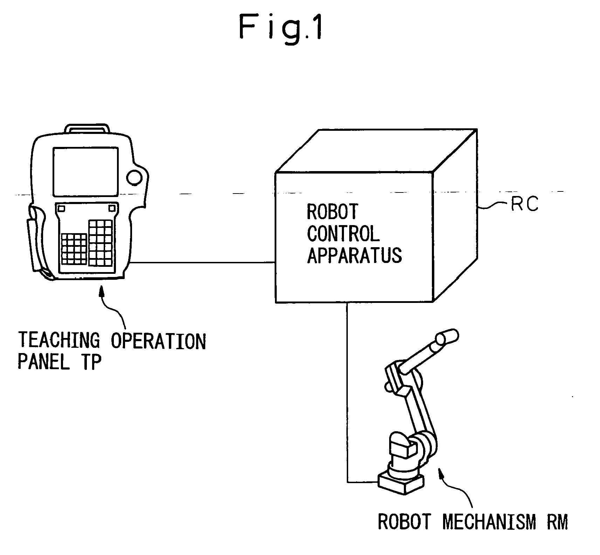

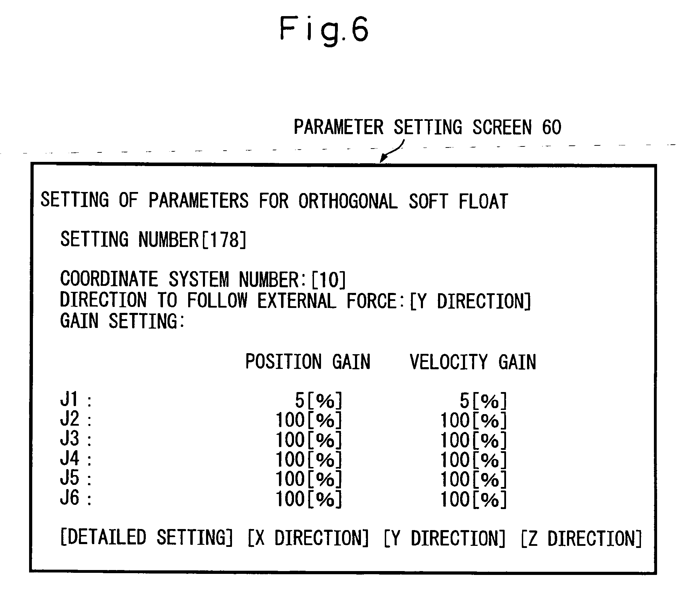

A robot control apparatus according to a preferred embodiment of the invention is explained in detail below with reference to the accompanying drawings (Figs. 1 to 6).
Fig. 1 is a schematic diagram showing the general configuration of the robot control system according to an embodiment of the invention.
The robot control system shown in Fig. 1 comprises a robot control apparatus RC for controlling the whole system including the servo control (soft control) of an industrial robot; and a robot mechanism RM for driving the industrial robot with a servo motor or the like in accordance with a control signal from the robot control apparatus RC. The robot control system further comprises a teaching operation panel TP including a parameter setting screen for the user to manually input the parameters for the soft control operation of the industrial robot. Next, the robot control apparatus RC making up a feature component element of this invention is explained in more detail.

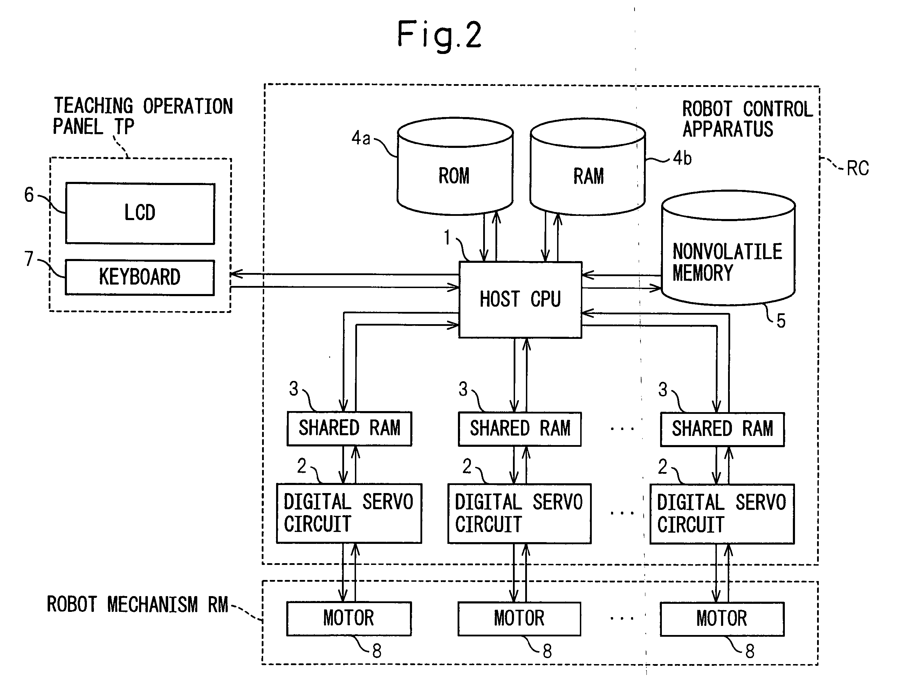

Fig. 2 is a block diagram showing the configuration of the robot control apparatus according to an embodiment of the invention. The configuration of the robot control apparatus used in this embodiment of the invention is shown in a simplified form. In the description that follows, similar component elements to those described above are designated by the same reference numerals, respectively.
First, the parts directly related to the soft control operation on the orthogonal coordinate of the robot (hereinafter referred to as the "orthogonal soft float") are explained. The robot control apparatus shown in Fig. 2 includes a host CPU 1 for controlling the whole system, and a shared RAM memory 3 for delivering the motion command and the control signal output from the host CPU 1 to the processor of each digital servo circuit 2 described later or, conversely, delivering the various signals from the processor of the digital servo circuit 2 to the host CPU 1. Each digital servo (software servo) circuit 2 for executing the servo control operation described above is configured of a processor not shown in Fig. 2 and memories such as a ROM and a RAM.
With regard to the remaining parts, a ROM 4a, a RAM 4b, a nonvolatile memory 5 and a teaching operation panel TP are connected to the host CPU 1. The ROM 4a has stored therein various system programs. The RAM 4b, on the other hand, is a memory used by the host CPU 1 for temporarily storing the data. The nonvolatile memory 5 has stored therein various programs on the specific operations of the robot and the related settings.
The teaching operation panel TP includes a liquid crystal display (LCD) 6 and a keyboard 7 and adapted to input/change the program data and the related settings. Further, the robot mechanism RM includes a plurality of motors (such as servo motors) 8 for driving the robot in accordance with the motion command or the control signal from the host CPU 1.
According to this embodiment, the nonvolatile memory 5 has stored therein the data on the softness in each direction on the orthogonal coordinate system input through the parameter setting screen for the orthogonal soft float from the teaching operation panel TP and the settings of the coordinate system.
In the soft operation control of the robot, the user first accesses the parameter setting screen 60 for the orthogonal soft float shown in Fig. 6 on the liquid crystal display 6 added to the teaching operation panel TP.
A task coordinate system for carrying out the orthogonal soft float and the direction to follow the external force can be set on the parameter setting screen.
Further, the axis (control axis) reduced in gain during the soft control operation can also be set on the parameter setting screen. The user selects the joint axis having a large effect on the motion in the direction set to follow the external force (Y direction in the example shown in Fig. 6), and inputs the ratio $\alpha p$ between the position gain Ksp after reduction and the normal position gain Kp and the ratio $\alpha v$ between the velocity gain Ksv after reduction and the normal velocity gain Kv. In the case under consideration, an example is shown in which the J1 axis is selected, and $\alpha p$ of 5 % and $\alpha v$ of 5 % are set for the J1 axis.

The axis selection and the ratio setting described above may not be input by the user but may be determined by the robot control apparatus in accordance with a predetermined rule, and the result thus determined may be displayed on the parameter setting screen. As an example of this rule, a method can be used in which the Jacobian of the orthogonal travel distance in the direction to follow for the travel distance on each axis at the soft control starting point, for example, is calculated, and constants of the ratios $\alpha p$ and $\alpha v$ (for example, 10 % and 10 %, respectively) for the axis larger in Jacobian are set automatically.

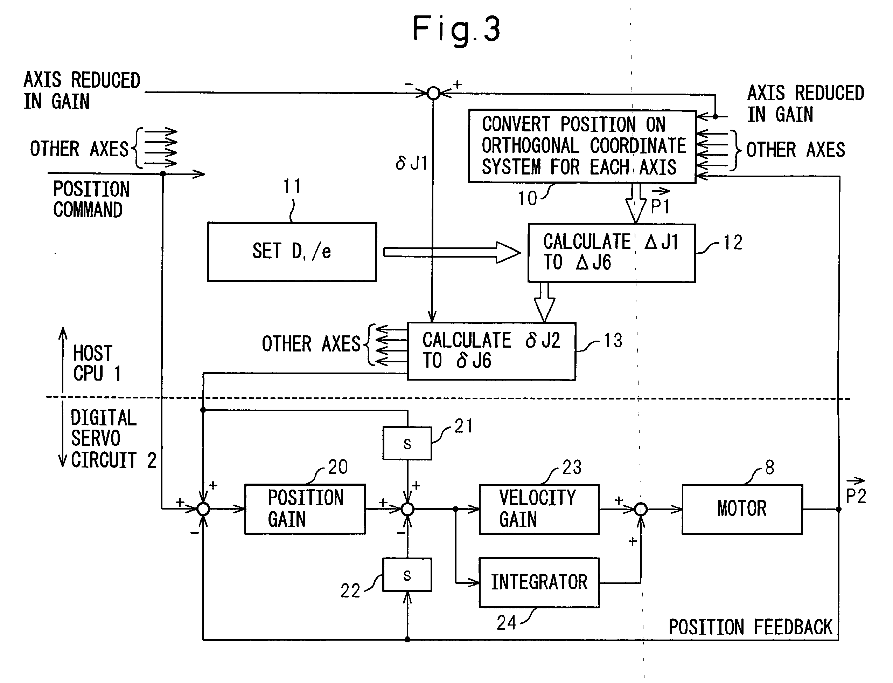

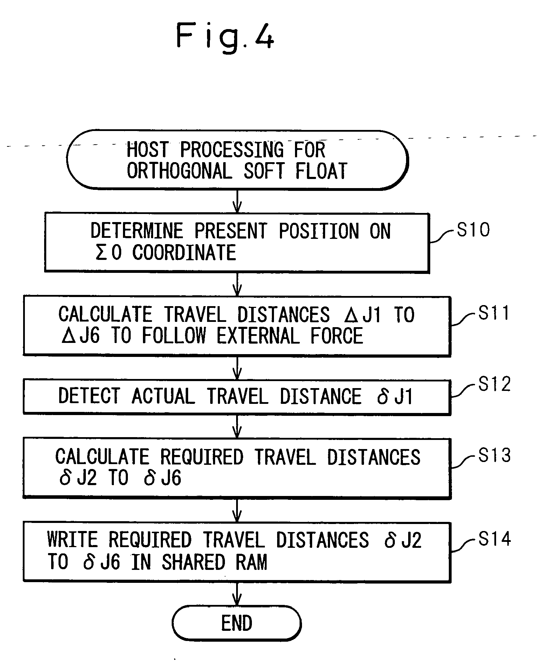

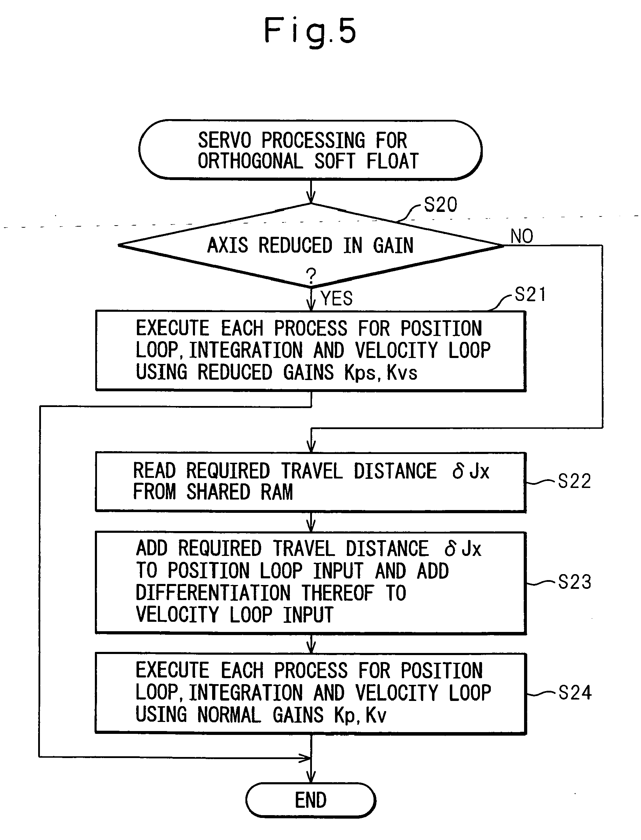

Fig. 3 is a block diagram showing the control system in soft control operation according to this invention; Fig. 4 a flowchart showing the host processing of the orthogonal soft float according to this invention; and Fig. 5 a flowchart showing the servo processing of the orthogonal soft float according to this invention.

Once the orthogonal soft floating function is validated by the orthogonal soft float start instruction in- the-operation program read from the nonvolatile memory 5 (Fig. 2) by the host CPU 1 (Fig. 2) or the manual operation on the teaching operation panel, the processes shown in Figs. 4 and 5 are executed at a predetermined period and the orthogonal soft floating function is executed according to the principle described below.

More specifically, the orthogonal soft floating function is executed by reducing the position loop gain and the velocity loop gain using the preset ratios $\alpha p$, $\alpha v$ for the axis to be reduced in gain at the time of starting the orthogonal soft float.

The flowchart of Fig. 4 is explained in detail below. In the case in which the host processing of the orthogonal soft floating function shown in Fig. 4 is executed in accordance with the operation program described above, the present position is first determined on the coordinate of the orthogonal coordinate system $\Sigma 0$ as shown in step S10.

Next, as shown in step S11, the travel distances $\Delta J1$ to $\Delta J6$ to follow the external force are calculated. Further, as shown in step S12, the actual travel distance $\delta J1$ of the axis (for example, J1 axis) to be reduced in gain is detected.

Further, as shown in step S13, the travel distances $\delta J2$ to $\delta J6$ required of the axes other than the axis to be reduced in gain are calculated. Furthermore, as shown in step S14, the required travel distances $\delta J2$ to $\delta J6$ are written in the shared memories. Now, the host processing of the orthogonal soft floating function is over.

The flowchart of Fig. 5 is explained in more detail. In the case in which the servo processing of the orthogonal soft floating function shown in Fig. 5 is executed in accordance with the operation program described above, first, step S20 judges whether or not the axis (for example, the J1 axis) to be reduced in gain has been selected.

In the case in which step S20 has judged that the axis to be reduced in gain has been selected, the process proceeds to step S21, where each process of the position loop, the integration and the velocity loop is executed using the position gain Ksp after gain reduction and the velocity gain Ksv after gain reduction. As a result, the position loop gain and the velocity loop gain are controlled downward on the axis to be reduced in gain.

In the case in which step S20 has judged that an axis other than the axis to be reduced in gain has been selected, on the other hand, the process proceeds to step S22 and the required travel distance $\delta Jx$ (in the case under consideration, Jx indicates an axis other than the axis to be reduced in gain) is read from the shared memory.

Further, as shown in step S23, the required travel distance $\delta Jx$ is added to the input of the position loop while at the same time adding the differentiation of the required travel distance $\delta Jx$ to the input of the velocity loop. Furthermore, as shown in step S24, each process of the position loop, the integration and the velocity loop is executed using the normal position gain Kp and the normal velocity gain Kv. As a result, the servo processing of the orthogonal soft floating function is completed.

Then, the process in the block diagram of Fig. 3 showing the control system is executed at predetermined time intervals during the execution of the orthogonal soft floating function.

First, the host CPU 1 (Fig. 2) determines, in the blocks 10 to 12, the motion amount of each axis (travel distances $\Delta J1$ to $\Delta J6$ to follow the external force) in the case in which the tool center point (TCP) of the robot moves over a predetermined distance D, while maintaining the orientation of the forward end of the robot arm as of the time of starting the orthogonal soft float, in the direction /e ("e" indicates -the- vector e) in which to follow the external force, from the present position /P1 ("/P1" indicates the vector P1) at the coordinate on the orthogonal coordinate system $\Sigma 0$. The motion amount of each axis can be calculated according to the equations described below. In these equations, /P2 ("/P2" indicates the vector P2) indicates the position of the robot that has traveled the predetermined distance D while maintaining the orientation of the forward end of the robot arm as of the time when the orthogonal soft float is started.

$$/P2 \ = \ /P1 \ + \ D \cdot /e$$

$$/P1 \rightarrow \{J11, J21, J31, J41, J51, J61\}$$

$$/P2 \rightarrow \{J12, J22, J32, J42, J52, J62\}$$

$$\{\Delta J1: \Delta J2: \Delta J3: \Delta J4: \Delta J5: \Delta J6\} = \{J11 - J12, J21 - J22, J31 - J32, J41 - J42, J51 - J52, J61 - J62\}$$

Next, in block 13, the actual travel distance of the axis reduced in gain is detected. In the case in which J1 is the axis reduced in gain, for example, the actual travel distance of the J1 axis is determined as δJ1.

Further, the travel distances δJ2 to δJ6 for which the axes other than the axis reduced in gain are to be traveled are determined in the block 13. These travel distances δJ2 to δJ6 can be calculated from the following equations:

$$\delta 12 = \delta J1 \times \delta J2 / \Delta J1$$

$$\cdot$$
$$\cdot$$
$$\cdot$$

$$\delta 16 = \delta J1 \times \delta J6 / \Delta J1$$

The travel distances δJ2 to δJ6 of the axes other than the axis reduced in gain are each sent to the digital servo circuit 2 (Fig. 2) through the shared RAM.

In the digital servo circuits 2, the travel distances δJ2 to δJ6 of the axes other than the axis reduced in gain are applied as an input to the position loop (the loop including the position gain block 20 and the position feedback path) on the one hand, and the differentiation of each of the travel distances δJ2 to δJ6 calculated by the differentiator 21 is applied as an input to the velocity loop (the loop including the velocity gain block 23 and the differentiator 22 related to the velocity feedback path) on the other hand.

Further, each digital servo circuit 2 executes the process in the position loop and the velocity loop and subjects the motors 8 in the robot to the digital servo control operation. As a result, the tool center point (TCP) of the robot can be moved while maintaining the orientation in the direction following the external force from the present position.

In the soft control operation of the robot having an integrator (the integrator 24 in Fig. 3, for example) in the velocity loop, on the other hand, the gravity moment and the torque equivalent to the Coulomb friction are stored in the integrator at the time of starting the soft control operation. In the case in which the torque equivalent to the Coulomb friction is opposite to the external force, however, the motion could not be started inconveniently unless an extraneous external force to offset the torque is applied.

To overcome this disadvantage, a method of performing the preliminary operation in the direction to follow and integrating the torque in the direction compensating for the friction by the integrator of the velocity loop is often used in the actual production field. More specifically, the user adds a position control operation instruction to perform the preliminary operation before the soft control operation start instruction in the motion program.

Even in the case in which the position control operation instruction is not applied, the direction and distance of the preliminary motion are set in advance, and upon receipt of the soft control operation start instruction, the preliminary motion is generated and performed by the interpreter of the control apparatus, after which the soft control operation is started. Thus, the function having a similar effect can be used for this embodiment.

Also, this embodiment is applicable to the function to achieve a similar effect in the case in which the distance for the preliminary motion is lacking for the reason of layout of the robot and the peripheral devices, in which case an amount corresponding to the torque integrated by the integrator in the preliminary motion is set in advance and this torque is applied to the output of the velocity loop during the execution of the soft control operation.

The method described above can compensate for the friction only in the case in which the direction of motion during the soft control operation is known in advance. In the case where the direction of motion during the soft control operation is unknown, on the other hand, this embodiment is applicable to the function in which upon application of an external force from one direction by applying a periodical torque of a sinusoidal wave, a triangular wave or a rectangular wave having an amplitude approximate to the magnitude of the static friction, the direction of the external force is coincident with that of the periodical torque and the sum of the torques exceeds the static friction so that the motion in the particular direction can be started.

Also, in the case in which the orthogonal soft float is carried out on the task coordinate system or the direction of the preliminary motion is designated on the coordinate system, the coordinate system is required to be set in advance. For setting the coordinate system, a method of directly inputting the parameters of the coordinate system is generally employed. According to this embodiment, however, the direction of the coordinate system can be designated to facilitate the understanding intuitively by using the function of teaching two tool center points and setting the direction connecting the two points on one of the axes (for example, Z axis) of the task coordinate system for the orthogonal soft float or the direction of the preliminary motion.

With regard to the industrial applicability of the invention, this invention can be used with a robot control system including the robot control apparatus for soft control operation of an industrial robot, wherein the gain is reduced for a specified control axis during the soft control operation on the one hand and a command is determined and applied to the control axes not in soft control operation based on the direction to follow the external force on the other hand, thereby making the softness changeable on the orthogonal coordinate by controlling the servo motor for driving the robot axes.

**Claims**

1.  A robot control apparatus having position and velocity control loops for each robot control axis, comprising:

    means for inputting the information on the direction in which the forward end of the robot arm is to follow an external force;
    means for setting the position control gain and the velocity control gain of a specified control axis at a lower level than the position control gain and the velocity control gain, respectively, of the other control axes;
    means for determining the orientation of the forward end of the robot arm to be assumed during the follow-up of the external force and the orientation of the forward end of the robot arm immediately before starting the follow-up of the external force;
    means for determining the position command or the velocity command for the control axes other than the specified control axis based on the present position of the specified control axis moved by the external force applied to the forward end of the robot arm, the direction to follow the external force and the orientation of the forward end of the robot arm immediately before starting the follow-up; and
    means for applying a position command or a velocity command for the control axes other than the specified control axis to the control loop of each control axis.

2.  The robot control apparatus according to claim 1,
    wherein the specified control axis is set by manual input.

3.  The robot control apparatus according to claim 1,
    wherein the specified control axis is set automatically in accordance with the direction in which the forward end of the robot arm is to follow the external force and the robot position in which the external force is applied to the forward end of the robot arm.

# Fig.1

TEACHING OPERATION
PANEL TP

ROBOT
CONTROL
APPARATUS

RC

ROBOT MECHANISM RM

# Fig.2

TEACHING OPERATION
PANEL TP

- 6 LCD
- 7 KEYBOARD

ROBOT CONTROL
APPARATUS

RC

- 4a ROM
- 4b RAM
- 5 NONVOLATILE MEMORY
- 1 HOST CPU

- 3 SHARED RAM
- 3 SHARED RAM
- 3 SHARED RAM

- 2 DIGITAL SERVO CIRCUIT
- 2 DIGITAL SERVO CIRCUIT
- 2 DIGITAL SERVO CIRCUIT

ROBOT MECHANISM RM

- 8 MOTOR
- 8 MOTOR
- 8 MOTOR

EP 2 000 268 A2

# Fig.3

EP 2 000 268 A2

# Fig.4

HOST PROCESSING FOR
ORTHOGONAL SOFT FLOAT

DETERMINE PRESENT POSITION ON
$\Sigma 0$ COORDINATE ⟋S10

CALCULATE TRAVEL DISTANCES $\Delta$ J1 TO
$\Delta$ J6 TO FOLLOW EXTERNAL FORCE ⟋S11

DETECT ACTUAL TRAVEL DISTANCE $\delta$ J1 ⟋S12

CALCULATE REQUIRED TRAVEL DISTANCES
$\delta$ J2 TO $\delta$ J6 ⟋S13

WRITE REQUIRED TRAVEL DISTANCES $\delta$ J2
TO $\delta$ J6 IN SHARED RAM ⟋S14

END

# Fig.5

$$\boxed{\begin{array}{c} \text{SERVO PROCESSING FOR} \\ \text{ORTHOGONAL SOFT FLOAT} \end{array}}$$

S20

AXIS REDUCED IN GAIN ?

NO

YES — S21

EXECUTE EACH PROCESS FOR POSITION LOOP, INTEGRATION AND VELOCITY LOOP USING REDUCED GAINS Kps, Kvs

READ REQUIRED TRAVEL DISTANCE $\delta$ Jx FROM SHARED RAM — S22

ADD REQUIRED TRAVEL DISTANCE $\delta$ Jx TO POSITION LOOP INPUT AND ADD DIFFERENTIATION THEREOF TO VELOCITY LOOP INPUT — S23

EXECUTE EACH PROCESS FOR POSITION LOOP, INTEGRATION AND VELOCITY LOOP USING NORMAL GAINS Kp, Kv — S24

END

# Fig.6

PARAMETER SETTING SCREEN 60

SETTING OF PARAMETERS FOR ORTHOGONAL SOFT FLOAT

SETTING NUMBER[178]

COORDINATE SYSTEM NUMBER:[10]
DIRECTION TO FOLLOW EXTERNAL FORCE:[Y DIRECTION]
GAIN SETTING:

|      | POSITION GAIN | VELOCITY GAIN |
|------|---------------|---------------|
| J1 : | 5[%]          | 5[%]          |
| J2 : | 100[%]        | 100[%]        |
| J3 : | 100[%]        | 100[%]        |
| J4 : | 100[%]        | 100[%]        |
| J5 : | 100[%]        | 100[%]        |
| J6 : | 100[%]        | 100[%]        |

[DETAILED SETTING] [X DIRECTION] [Y DIRECTION] [Z DIRECTION]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3473834 B

- JP 8155868 A